# EUROPÄISCHE PATENTSCHRIFT

(11) **EP 3 878 080 B1**
(45) Veröffentlichungstag und Bekanntmachung des Hinweises auf die Patenterteilung: **27.11.2024**
(21) Anmeldenummer: 19797712.7
(22) Anmeldetag: 31.10.2019
(51) Int. Cl.: H02K 9/193, H02K 5/173

(54) **ELEKTRISCHE MASCHINE MIT EINER FLUID-KÜHLEINRICHTUNG**
ELECTRIC MACHINE HAVING A FLUID COOLING DEVICE
MACHINE ÉLECTRIQUE MUNIE D'UN DISPOSITIF DE REFROIDISSEMENT PAR FLUIDE

(30) Priorität: 05.11.2018 DE 102018218815
(43) Veröffentlichungstag der Anmeldung: 15.09.2021
(73) Patentinhaber: ZF Friedrichshafen AG, 88046 Friedrichshafen (DE)
(72) Erfinder: HACKLBERGER, Michael, 94127 Neuburg am Inn (DE); KORNEXL, Sebastian, 94110 Wegscheid (DE); GEIER, Manfred, 94161 Ruderting (DE)
(86) Internationale Anmeldenummer: PCT/EP2019/079925
(87) Internationale Veröffentlichungsnummer: WO 2020/094513

(56) Entgegenhaltungen:
- CN-U- 206 237 252
- DE-A1- 19 913 199
- DE-C- 614 536
- JP-A- H0 946 973

## Beschreibung

Die Erfindung betrifft eine elektrische Maschine mit einer Fluid-Kühleinrichtung nach dem Oberbegriff von Patentanspruch 1.

Mit der WO 2016/050534 A1 ist eine elektrische Maschine bekannt geworden bei welcher zur Kühlung des Rotors in eine abschnittweise als Hohlwelle ausgeführte Rotorwelle axial ein Kühlrohr eingeführt ist, durch welches ein Kühlfluid in einem zwischen diesem und der Rotorwelle vorhandenen Ringraum einströmen und eine Verlustwärm des Rotors aufnehmen kann. Der von dem Kühlfluid durchflossene Raumbereich der Rotorwelle erstreckt sich axial im Wesentlichen von deren offenen Endbereich bis zu einem diesem abgewandten Ende eines Tragbereichs für ein Rotorblechpaket. Das Kühlmittel kann dabei auf derselben Stirnseite der elektrischen Maschine ein- und ausströmen, wodurch lediglich ein Dichtelement zwischen dem drehenden Rotor und den dazu feststehenden Elementen der Maschine erforderlich ist.

Die DE 199 13 199 A1 und die JP 9046973 A2 offenbaren jeweils eine gattungsgemäße elektrische Maschine, bei welcher sich ein von Kühlfluid durchströmter Hohlraum der Rotorwelle gegenüber dem zuvor erläuterten Aufbau noch weiter in axialer Richtung erstreckt und somit einen Raumbereich zwischen zwei, durch den Tragbereich des Rotorblechpakets beabstandeten Lagerstellen der Rotorwelle kühlen kann. Die CN 206 237 252 U offenbart eine demgegenüber grundsätzlich vergleichbare Rotorkühlanordnung für eine elektrische Maschine.

Die Erfindung stellt sich die Aufgabe, eine solche gattungsgemäße elektrische Maschine mit einer Fluid-Kühleinrichtung weiter zu verbessern.

Die vorstehend genannte Aufgabe wird durch eine elektrische Maschine mit den im Patentanspruch 1 angegebenen Merkmalen gelöst. Vorteilhafte Ausgestaltungen und Weiterbildungen der Erfindung sind den abhängigen Ansprüchen sowie der nachfolgenden Figurenbeschreibung entnehmbar.

Es wird im Rahmen der vorliegenden Erfindung eine elektrische Maschine mit einer Fluid-Kühleinrichtung vorgeschlagen, welche zunächst einen Stator mit einem Statorblechpaket und mit einer Statorwicklung und einen Rotor mit einem Rotorblechpaket umfasst, welcher mittels einer Rotorwelle und einem an einem ersten Lagerschild angeordneten ersten Lager um eine Achse drehbar zu dem Stator gelagert ist. Die Fluid-Kühleinrichtung weist ein Kühlrohr auf, welches an einem statorfesten Trägerelement der elektrischen Maschine festgelegt ist und welches mit einem Fluideingang in Verbindung steht und welches sich axial innerhalb einer zentralen Ausnehmung der Rotorwelle und unter Ausbildung eines Ringraumes zu der Rotorwelle erstreckt. Dabei steht das Kühlrohr gleichzeitig mit dem Ringraum und mit einem Fluidausgang in Fluidverbindung. Weiter ist zwischen der Rotorwelle und dem Trägerelement ein Dichtbereich mit einem Dichtelement vorgesehen, welches beim Durchströmen eines Kühlfluids vom Fluideingang zum Fluidausgang einen Fluidübertritt in einen außerhalb des Dichtbereichs liegenden Raumbereich der elektrischen Maschine zumindest im Wesentlichen verhindert. Zur Lagerung des Rotors ist ein von dem ersten Lager axial beabstandetes zweites Lager zwischen der Rotorwelle und einem zweiten Lagerschild vorgesehen, wobei sich das Rotorblechpaket in einem Raum zwischen dem ersten und dem zweiten Lager erstreckt und wobei sich die zentrale Ausnehmung innerhalb der Rotorwelle axial zumindest bis zu dem zweiten Lager erstreckt.

Gemäß der Erfindung ist bei der elektrischen Maschine vorgesehen, dass die Rotorwelle einen sich axial über das zweite Lager hinausragenden Wellenabschnitt mit einem Abtriebselement aufweist, wobei sich die zentrale Ausnehmung der Rotorwelle axial bis in den Bereich des Abtriebselements erstreckt und von dem Kühlfluid durchströmt wird.

Durch die vorgeschlagene Ausbildung der Fluid-Kühleinrichtung kann die Lageranordnung der elektrischen Maschine mit dem ersten und dem zweiten Lager vollständig durch das innerhalb der Rotorwelle zirkulierende Kühlfluid gekühlt werden. Die beim Betrieb der elektrischen Maschine an diesen Lagerstellen erzeugte Verlustwärme kann unmittelbar durch Wärmeleitung über den jeweils radial inneren Lagerring auf die Rotorwelle und von dieser innerhalb der zentralen Ausnehmung an das strömende Kühlfluid abgegeben werden. Die zentrale Ausnehmung erstreckt sich somit durch das zweite Lager hindurch, so dass damit ein dem Rotor axial abgewandter Abschnitt der Rotorwelle und der elektrischen Maschine besser gekühlt werden kann.

Das Kühlrohr kann sich zusätzlich gleichfalls axial bis in den vorgenannten Bereich des Abtriebselements erstrecken. Das Abtriebselement und damit in Wärmeaustausch stehende weitere Elemente und/oder ein außerhalb der Rotorwelle befindliches Schmier- oder Kühlmittel können somit ebenfalls in den Wirkungsbereich der Fluid-Einrichtung gelangen und gekühlt werden. Beispielweise kann das Abtriebselement zu einem Getriebe gehören, so dass die weiteren Elemente des Getriebes gleichfalls eine auftretende Verlustwärme über die Rotorwelle abgeben können.

Der das zweite Lager tragende Bereich der Rotorwelle wird somit gleichfalls laminar von dem Kühlfluid angeströmt. Dieser Bereich befindet sich somit außerhalb eines Bereichs mit einer turbulenten Strömung, wie diese im axialen Endbereich der zentralen Ausnehmung, also am Umkehrpunkt der Fluidströmung in der Rotorwelle auftreten kann. In einem solchen Bereich kann der Wärmeaustausch zwischen Kühlfluid und Rotorwelle gegenüber dem vorgenannten Bereich reduziert sein.

Gemäß einer vorteilhaften Ausgestaltung kann ein Innendurchmesser der Rotorwelle im Bereich einer axialen Erstreckung des Rotorblechpakets und im Bereich des zweiten Lagers größer sein als im Bereich des ersten Lagers. Durch die Vergrößerung der Innenumfangsfläche der Rotorwelle kann bei einem angepassten Volumenstrom des Kühlfluids ein entsprechend erhöhter Wärmestrom erzeugt werden. Das heißt, die elektrische Maschine kann auf einer niedrigeren Betriebstemperatur arbeiten und vor einer übermäßigen Erhitzung geschützt werden. Andererseits ist dadurch gleichfalls eine erhöhte Dauerleistung möglich.

Gemäß einer noch weiteren Ausgestaltung kann das Abtriebselement an der Rotorwelle axial zwischen dem zweiten Lager und einem dritten Lager angeordnet sein, wobei sich die zentrale Ausnehmung der Rotorwelle axial bis in den Bereich des dritten Lagers erstreckt und von dem Kühlfluid durchströmt wird. Dabei kann sich auch das Kühlrohr bis zu dem dritten Lager oder noch durch dieses hindurch erstrecken.

Nachfolgend wird die Erfindung anhand einer in den Figuren dargestellten Ausführungsform beispielhaft erläutert.

Es zeigen:
- Fig. 1: eine als Fahrzeugachsantrieb ausgebildete elektrische Maschine mit einer Fluid-Kühleinrichtung in einer Axialschnittdarstellung;

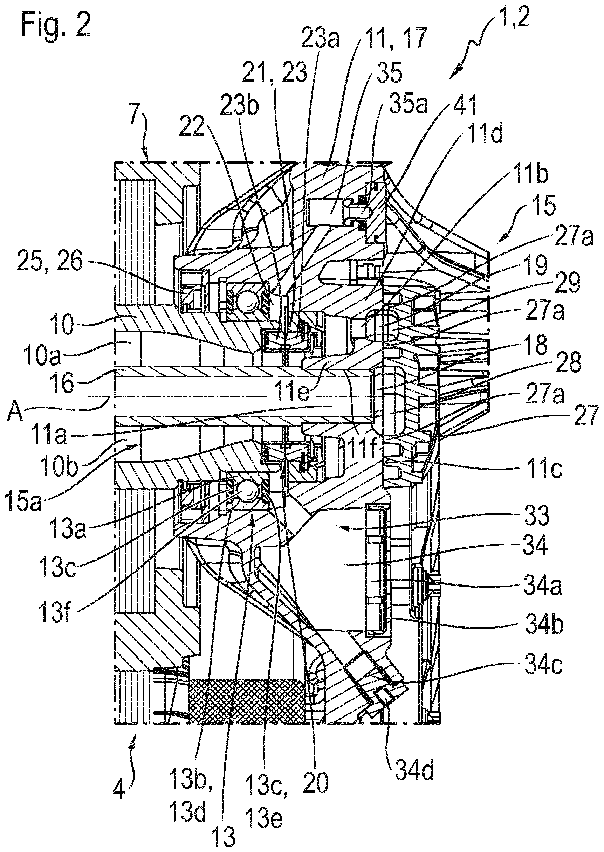

- Fig. 2: ein vergrößerter Ausschnitt der Fluid-Kühleinrichtung von Fig. 1 im Bereich eines Lagerschildes der elektrischen Maschine;

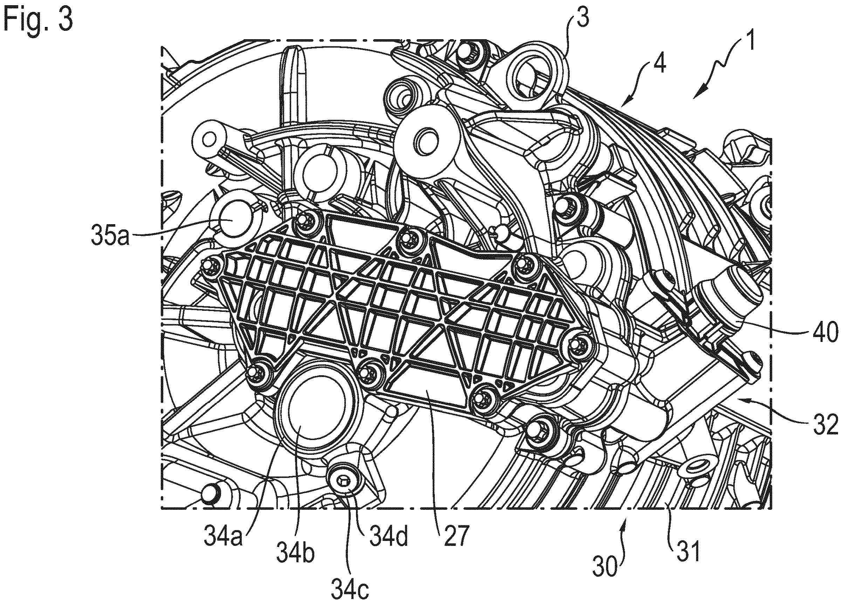

- Fig. 3: eine perspektivische Darstellung der elektrischen Maschine im Bereich des Lagerschilds von Fig. 3;

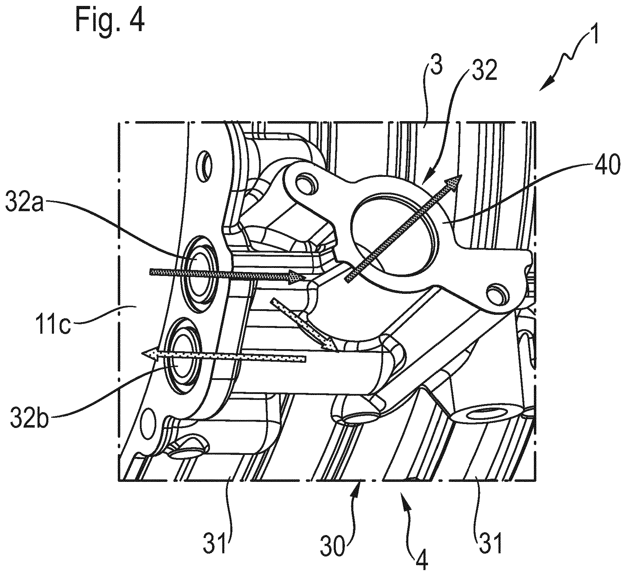

- Fig. 4: eine perspektivische Ansicht eines an einem Gehäuse der elektrischen Maschine ausgebildeten Kühlmittelflansches.

Die Figuren zeigen eine elektrische Maschine 1, welche insbesondere zum Antreiben eines Elektro- oder Hybridfahrzeugs vorgesehen und ausgebildet ist. Insbesondere ist die elektrische Maschine 1 zum Einbau in oder an eine Fahrzeugachse vorgesehen und stellt somit in Verbindung mit weiteren Komponenten einen elektrischen Achsantrieb 2 dar. Die elektrische Maschine 1 gibt ihre Leistung somit an Fahrzeugräder zum Fortbewegen des Fahrzeugs ab. Es werden insofern über die nachfolgend im Detail erläuterte elektrische Maschine 1 hinausgehend ebenso ein elektrischer Fahrzeugantrieb und ein Fahrzeug mit einer solchen elektrischen Maschine 1 beschrieben.

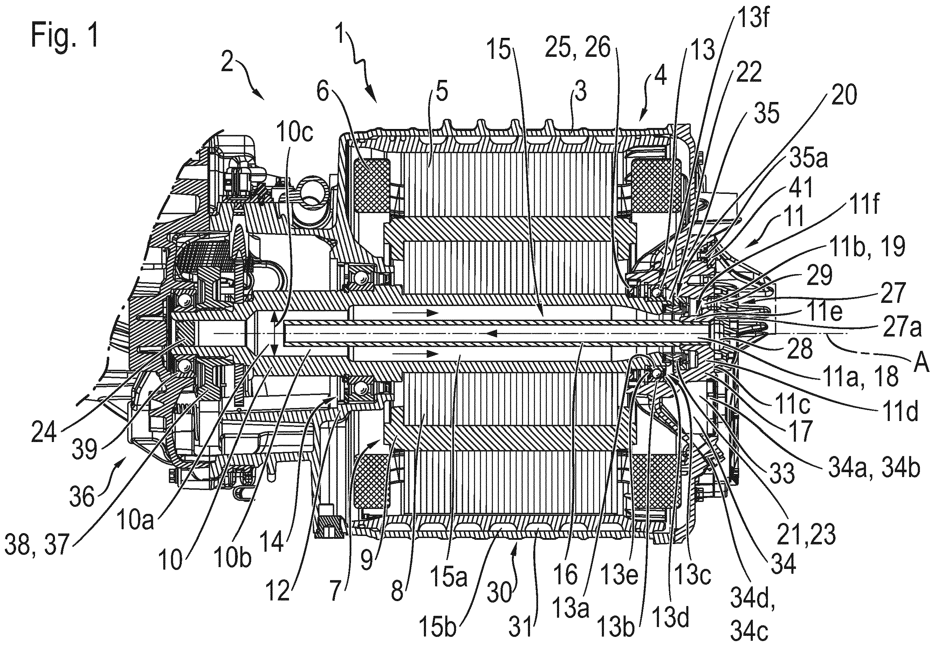

Die elektrische Maschine 1 umfasst einen in einem Gehäuse 3 festgelegten Stator 4 mit einem Statorblechpaket 5 und mit einer Statorwicklung 6 und einen Rotor 7 mit einem Rotorblechpaket 8 und mit einem Kurzschlusskäfig 9. Di elektrische Maschine 1 ist somit als eine Asynchronmaschine ausgebildet. Der Rotor 7 ist mittels einer Rotorwelle 10, einem an einem ersten Lagerschild 11 angeordneten ersten Lager 13 und einem an einem zweiten Lagerschild 12 angeordneten zweiten Lager 14 um eine Achse A drehbar zu dem Stator 4 gelagert. Die Rotorwelle 10 steht mit einem in Fig. 1 links dargestellten Getriebe 36 in Wirkverbindung, welches das Motordrehmoment über weitere, hier zeichnerisch nicht dargestellte Übertragungsorgane an Fahrzeugräder übertragen kann.

Die elektrische Maschine 1 weist eine von einem Kühlfluid durchströmbare Fluid-Kühleinrichtung 15 auf, welche eine aufgenommene Verlustwärme an einen außerhalb der elektrischen Maschine 1 befindlichen Wärmetauscher abgeben kann.

Die Fluid-Kühleinrichtung 15 umfasst ein Kühlrohr 16, welches an einem statorfesten Trägerelement 17, insbesondere an dem ersten Lagerschild 11 festgelegt ist und welches mit einem an dem Lagerschild 11 vorgesehenen Fluideingang 18 in Verbindung steht. Das Kühlrohr 16 ist dabei axial lediglich einseitig durch das Lagerschild 11 gelagert und erstreckt sich mit dessen größten Teilabschnitt in axialer Richtung frei innerhalb einer zentralen Ausnehmung 10a der Rotorwelle 10 und bildet zu der Rotorwelle 10 einen Ringraum 10b aus. Das Kühlrohr 16 ist axial beidseitig offen und steht somit gleichzeitig mit dem Ringraum 10b und mit einem gleichfalls am ersten Lagerschild 11 vorgesehenen Fluidausgang 19 in Fluidverbindung. Das erste Lagerschild 11 weist zur Ausbildung des Fluideingangs 18 eine zentrale erste Durchgangsöffnung 11a und zur Ausbildung des Fluidausgangs 19 eine radial zu der ersten Durchgangsöffnung angeordnete zweite Durchgangsöffnung 11b auf. Beide Durchgangsöffnungen 11a, b treten somit an einer dem Rotor 7 abgewandten stirnseitigen Montagefläche 11c aus dem Lagerschild 11 aus.

Zwischen der Rotorwelle 10 und dem als Trägerelement 17 fungierenden Lagerschild 11 ist ein Dichtbereich 20 mit einem Dichtelement 21 vorgesehen. Das Dichtelement 21 hat die Aufgabe, beim Durchströmen des Kühlfluids vom Fluideingang 18 zum Fluidausgang 19 einen Fluidübertritt in einen außerhalb des Dichtbereichs 20 liegenden Raumbereich 22 der elektrischen Maschine 1 zumindest im Wesentlichen zu verhindern.

Das Dichtelement 21 ist vorliegend als eine axiale Gleitringdichtung 23 ausgebildet ist. Die Gleitringdichtung 23 umfasst einen ersten Abschnitt 23a, welcher an dem Trägerelement 17 festgelegt ist und umfasst weiter einen zweiten Abschnitt 23b, welcher an der Rotorwelle 10 festgelegt ist und welcher mit dem ersten Abschnitt 23a in Dichtverbindung steht. Dabei ist der zweite Abschnitt 23b der Gleitringdichtung 23 zumindest teilweise axial überlappend zu dem ersten Lager 13 angeordnet. Weiterhin weist das erste Lager 13 sowohl an der der Gleitringdichtung 23 zugewandten Axialseite als auch an der dem Rotorblechpaket 8 zugewandten Axialseite eine zwischen einem radial inneren Lagerring 13a und einem radial äußeren Lagerring 13b wirkende Dichtungsanordnung 13c mit zwei Dichtscheiben 13d, e auf. Der Lagerinnenraum 13f ist weiter mittels eines Hochdrehzahl-Fetts gegenüber einem Eindringen von Kühlfluid abgedichtet ist. Dadurch wird einerseits das Lager 13 geschmiert und andererseits wird durch die geschaffene Fett-Barriere ein Eindringen von Fluid in den inneren Raumbereich 22 der elektrischen Maschine 1 vermieden.

Zu einer merklichen Vergrößerung der fluidgekühlten Innenumfangsfläche der Rotorwelle 10 und damit zum Zwecke einer weiteren Verbesserung der Kühlwirkung kann ein Innendurchmesser 10c der Rotorwelle 10 bzw. der dort vorhandenen zentralen Ausnehmung 10a im Bereich einer axialen Erstreckung des Rotorblechpakets 8 größer ausgebildet sein als im Bereich des ersten Lagers 13.

Wie erkennbar, ist die Rotorwelle 10 als eine Hohlwelle ausgebildet und an der dem Fluideingang 18 abgewandten Axialseite fluiddicht durch einen Verschluss 24 verschlossen. Die Fluidströmung erfährt durch die koaxiale Anordnung von Rotorwelle 10 und Kühlrohr 16 eine Richtungsumkehr entgegen der Einströmrichtung und kann auf der Axialseite des Fluideingangs 18 wieder ausströmen, wozu lediglich auf dieser Seite eine Dichtungsanordnung in Form des Dichtelements 21 erforderlich ist.

Von dem ersten Lagerschild 11 sind somit das Kühlrohr 16, das erste Lager 13 und der statorfeste Abschnitt 23a des Dichtelements 23 aufgenommen. Das erste Lagerschild 11 nimmt zudem ein mit der Rotorwelle 10 zusammenwirkendes elektrisches Potenzialausgleichselement 25 auf. Vorliegend ist als Potenzialausgleichselement 25 eine Schleifringanordnung 26 vorgesehen, welche als Wellenspannungen auftretende Potenzialunterschiede zwischen dem Stator 4 und dem Rotor 7 durch elektrischen Kurzschluss abbaut. Das Potenzialausgleichselement 25 ist axial benachbart zu dem ersten Lager 13 angeordnet, insbesondere axial zwischen dem Lager 13 und dem Rotorblechpaket 8.

Das Kühlrohr 16 ist an einem am Lagerschild 11 bzw. allgemein am Trägerelement 17 vorgesehenen Befestigungsbereich 11f festgelegt. Insbesondere ist das Kühlrohr 16 mittels einer Presspassung in einen von einem Grundkörper 11d des Lagerschilds 11 abstehenden Axialfortsatz 11e angeordnet, welcher den Befestigungsbereich 11f ausbildet. Es ist in den Figuren erkennbar, dass sich der Befestigungsbereich 11f axial teilweise mit dem statorfesten Abschnitt 23a des Dichtelements 21 bzw. der Gleitringdichtung 23 überdeckt.

Zurückkommend zu der Montagefläche 11c ist dort ein Deckelement 27 aus einem Kunststoff mit einer Steganordnung 27a fluiddicht angeordnet. Dabei sind durch die Steganordnung 27a zwischen dem Lagerschild 11 und dem Deckelement 27 und/oder in dem Deckelement 27 ein Fluidzulaufkanal 28 und ein Fluidablaufkanal 29 ausgebildet.

Das Gehäuse 3 der elektrischen Maschine 1 ist als Gußteil aus einem Leichtmetallwerkstoff, vorliegend aus einem Aluminiumwerkstoff ausgebildet. Das Gehäuse 3 bildet gleichzeitig einen den Stator 4 außen umgebenden Fluid-Kühlmantel 30 mit einer Fluidkanalanordnung 31 aus. Das Gehäuse 3 weist auf der dem ersten Lagerschild 11 zugewandten Seite einen damit integral ausgebildeten Kühlmittelflansch 32 mit zwei Fluid-Kanalabschnitten 32a, b auf, welche mit dem Fluidzulaufkanal 28 und dem Fluidablaufkanal 29 des Deckelements 27 in Fluidverbindung stehen. Der FluidKanalabschnitt 32a bildet dabei einen externen Kühlmittelanschluss 40 aus. Ein weiterer, hier zeichnerisch nicht dargestellter externer Kühlmittelanschluss kann beispielsweise an einer anderen Position des Statorkühlmantels oder an einer Leistungselektronik zum Ansteuern der elektrischen Maschine 1 angeordnet sein, welche mit deren Gehäuse und mit deren Kühlkreislauf mit der elektrischen Maschine 1 und mit der dort ausgebildeten Fluid-Kühleinrichtung 15 verbunden ist. Der weitere FluidKanalabschnitt 32b bildet hingegen einen Verbindungskanal zu dem Fluid-Kühlmantel 30 des Stators 4 aus. Die Fluid-Kühleinrichtung 15 kann somit einen Kühlabschnitt 15a zur Kühlung des Rotors 7 und einen Kühlabschnitt 15b zur Kühlung des Stators 4 aufweisen, welche nacheinander von dem Kühlfluid durchflossen werden und wobei eine zwischen diesen vorgesehene Fluidverbindung als ein fester, schlauchloser Verbindungskanal 32b ausgebildet ist.

Außerhalb des Dichtelements 21, also an der dem strömenden Kühlfluid abgewandten Seite der Gleitringdichtung 23 ist ein Leckageraum 33 mit einem Fluid-Sammelbereich 34 vorgesehen, in welchen ein durch den Dichtbereich 20 hindurchtretender Anteil des Kühlfluids eintreten und gesammelt werden kann. Der Leckageraum 33 weist weiterhin einen Gas-Sammelbereich 35 auf, welcher in einer Betriebslage der elektrischen Maschine 1 gegenüber dem Fluid-Sammelbereich 34 geodätisch höher angeordnet ist. Bei Verwendung eines Kühlfluids mit stofflich zumindest einer flüchtigen Komponente kann diese über die Gleitringdichtung 23 entweichen und sich in dem Gas-Sammelbereich 35 sammeln.

Sofern das Kühlfluid beim Entweichen der flüchtigen Komponente eine feststoffförmige Komponente ausscheidet, so wird diese gleichfalls von dem Fluid-Sammelbereich 34 aufgenommen. Zur Entnahme des feststoffförmigen Bestandteiles ist an dem Fluid-Sammelbereich 34 eine verschließbare Eingriffsöffnung 34a mit einem abnehmbaren Verschlussdeckel 34b vorgesehen.

Zur Entfernung eines in dem Fluid-Sammelbereich 34 vorhandenen Kühlfluids ist an diesem eine verschließbare Fluid-Ablassöffnung 34c mit einem Ablasselement 34d, insbesondere einer Ablassschraube oder einem Ablassstopfen vorgesehen. Die Fluid-Ablassöffnung 34c ist in einer Betriebslage der elektrischen Maschine 1 im Wesentlichen geodätisch nach unten ausgerichtet und gegenüber einer Gas-Ablassöffnung 35a des Gas-Sammelbereichs 35 geodätisch tiefer angeordnet. Zur leichten Entnahme von feststoffförmigen Bestandteilen ist die Eingriffsöffnung des Verschlussdeckels 34b mit einem größeren Querschnitt als die Fluid-Ablassöffnung 35a ausgebildet.

Die Fluid-Ablassöffnung 34c ist zumindest näherungsweise auf einer 06Uhr-Position vorgesehen, das heißt etwa zwischen einer 05Uhr- und einer 07Uhr-Position. Die Gas-Ablassöffnung 35a ist demgegenüber zumindest näherungsweise auf einer 12Uhr-Position vorgesehen, das heißt etwa zwischen einer 11Uhr- und einer 01Uhr-Position. Der Fluid-Sammelbereich 34 und der Gas-Sammelbereich 35 sind zumindest näherungsweise auf derselben axialen Position vorgesehen. Des Weiteren kann sich auch die Gleitringdichtung 23 an dieser axialen Position befinden oder sich zumindest axial mit dem Fluid-Sammelbereich 34 und/oder dem Gas-Sammelbereich 35 überlappen.

Die Gas-Ablassöffnung 35a des Gas-Sammelbereichs 35 weist weiterhin ein Druckausgleichselement 41 auf, wodurch wird ein Entweichen von Gasen aus dem Gas-Sammelbereich 35 ermöglicht wird. Das Druckausgleichselement 41 umfasst eine semipermeable Membran, welche zur Ermöglichung eines Druckausgleichs luftdurchlässig, jedoch nicht fluid-durchlässig ist.

Wie bereits vorher angesprochen, ist zur Lagerung des Rotors 7 zusätzlich zu dem ersten Lager 13 axial beabstandet das zweite Lager 14 vorgesehen, welches bei Bedarf ebenso axial ein- oder beidseitig mit Dichtringen und mit einer Schmiermittelfüllung ausgeführt sein kann. Das Lager 14 ist radial zwischen der Rotorwelle 10 und dem zweiten Lagerschild 12 vorgesehen, wobei sich das Rotorblechpaket 8 in einem axialen Raum zwischen dem ersten und dem zweiten Lager 11, 12 erstreckt. Wie erkennbar, erstreckt sich zum Zwecke einer verbesserten Kühlung die zentrale Ausnehmung 10a innerhalb der Rotorwelle 10 axial durch das zweite Lager 14 hindurch. Das Kühlrohr 16 erstreckt sich innerhalb der Rotorwelle 10 axial gleichfalls über das zweite Lager 12 hinaus. Wie weiter erkennbar, ist der Innendurchmesser der Rotorwelle 10 im Bereich der axialen Erstreckung des Rotorblechpakets 8 und im Bereich des zweiten Lagers 12 größer als im Bereich des ersten Lagers 11.

In dem erläuterten Ausführungsbeispiel weist die Rotorwelle 10 einen sich axial über das zweite Lager 12 hinausragenden und in das Getriebe 36 führenden Wellenabschnitt mit einem als Zahnrad 37 ausgebildeten Abtriebselement 38 auf. Die zentrale Ausnehmung 10a der Rotorwelle 10 erstreckt sich axial bis in den Bereich des Abtriebselements 38 und kann somit ebenso von dem Kühlfluid durchströmt werden. Gemäß einer Modifikation der Anordnung kann sich das Kühlrohr 16 gleichfalls axial bis in den genannten Bereich erstrecken. Das Abtriebselement 38 und damit in Wärmeaustausch stehende weitere Elemente und/oder ein außerhalb der Rotorwelle 10 befindliches Schmier- oder Kühlmittel können somit ebenfalls in den Wirkungsbereich der Fluid-Kühleinrichtung 15 gelangen und gekühlt werden.

Wie noch weiter in den Figuren erkennbar, ist das Abtriebselement 38 an der Rotorwelle 10 axial zwischen dem zweiten Lager 14 und einem dritten Lager 39 angeordnet. Dabei reicht die zentrale Ausnehmung 10a der Rotorwelle 10 axial bis in den Bereich des dritten Lagers 39 heran und wird also bis zu dieser Position von dem Kühlfluid durchströmt. Das dritte Lager 39 befindet sich somit gleichfalls im Wirkungsbereich der vorstehend beschriebenen Fluid-Kühleinrichtung 15.

In der vorstehenden Beschreibung wurden Bezeichnungen von Funktionselementen teilweise mit Bezug auf eine feste Strömungsrichtung gewählt. Bei der erläuterten elektrischen Maschine ist die Strömungsrichtung des Kühlfluids innerhalb der Fluid-Kühleinrichtung grundsätzlich umkehrbar. Die mit Bezug zur Strömungsrichtung bezeichneten Funktionselemente erhalten bei umgekehrter Strömungsrichtung die entsprechend gegenläufige Bedeutung. Das heißt, das beispielweise ein als Fluideingang bezeichneter Abschnitt oder Bereich nunmehr den Fluidausgang bildet usw.

**Bezugszeichen**

| | | | |
|---|---|---|---|
| 1 | elektrische Maschine | 15b | Statorkühlabschnitt |
| 2 | Achsantrieb | 16 | Kühlrohr |
| 3 | Gehäuse | 17 | Trägerelement |
| 4 | Stator | 18 | Fluideingang |
| 5 | Statorblechpaket | 19 | Fluidausgang |
| 6 | Statorwicklung | 20 | Dichtbereich |
| 7 | Rotor | 21 | Dichtelement |
| 8 | Rotorblechpaket | 22 | Raumbereich |
| 9 | Kurzschlusskäfig | 23 | Gleitringdichtung |
| 10 | Rotorwelle | 23a | erster Abschnitt |
| 10a | Ausnehmung | 23b | zweiter Abschnitt |
| 10b | Ringraum | 24 | Verschluss |
| 10c | Innendurchmesser | 25 | Potenzialausgleichselement |
| 11 | Lagerschild | 26 | Schleifringanordnung |
| 11a | Durchgangsöffnung | 27 | Deckelement |
| 11b | Durchgangsöffnung | 27a | Steganordnung |
| 11c | Montagefläche | 28 | Fluidzulaufkanal |
| 11d | Grundkörper | 29 | Fluidablaufkanal |
| 11e | Axialfortsatz | 30 | Fluidkühlmantel |
| 11f | Befestigungsbereich | 31 | Fluidkanalanordnung |
| 12 | Lagerschild | 32 | Kühlmittelflansch |
| 13 | Lager | 32a, b | Fluidkanalabschnitt |
| 13a | innerer Lagerring | 33 | Leckageraum |
| 13b | äußerer Lagerring | 34 | Fluid-Sammelbereich |
| 13c | Dichtungsanordnung | 34a | verschließbare Eingriffsöffnung |
| 13d, e | Dichtscheibe | 34b | Verschlussdeckel |
| 13f | Lagerinnenraum | 34c | Fluid-Ablassöffnung |
| 14 | Lager | 34d | Ablasselement |
| 15 | Fluid-Kühleinrichtung | 35 | Gas-Sammelbereich |
| 15a | Rotorkühlabschnitt | 35a | Gas-Ablassöffnung |
| 36 | Getriebe | 40 | externer Kühlmittelanschluss |
| 37 | Zahnrad | 41 | Druckausgleichselement |
| 38 | Abtriebselement | A | Drehachse |
| 39 | Lager | | |

## Patentansprüche

1. Elektrische Maschine (1) mit einer Fluid-Kühleinrichtung (15), umfassend
- einen Stator (4) mit einem Statorblechpaket (5) und mit einer Statorwicklung (6),
- einen Rotor (7) mit einem Rotorblechpaket (8), welcher mittels einer Rotorwelle (10) und einem an einem ersten Lagerschild (11) angeordneten ersten Lager (13) um eine Achse (A) drehbar zu dem Stator (4) gelagert ist und wobei
- die Fluid-Kühleinrichtung (15) ein Kühlrohr (16) aufweist, welches an einem statorfesten Trägerelement (17) der elektrischen Maschine (1) festgelegt ist und mit einem Fluideingang (18) in Verbindung steht und welches sich axial innerhalb einer zentralen Ausnehmung (10a) der Rotorwelle (10) und unter Ausbildung eines Ringraumes (10b) zu der Rotorwelle (10) erstreckt, wobei
- das Kühlrohr (16) mit dem Ringraum (10b) und mit einem Fluidausgang (19) in Fluidverbindung steht und wobei
- zwischen der Rotorwelle (10) und dem Trägerelement (17) ein Dichtbereich (20) mit einem Dichtelement (21) vorgesehen ist, welches beim Durchströmen eines Kühlfluids vom Fluideingang (18) zum Fluidausgang (19) einen Fluidübertritt in einen außerhalb des Dichtbereichs (20) liegenden Raumbereich (22) der elektrischen Maschine (1) zumindest im Wesentlichen verhindert, wobei
- zur Lagerung des Rotors (7) ein von dem ersten Lager (13) axial beabstandetes zweites Lager (14) zwischen der Rotorwelle (10) und einem zweiten Lagerschild (12) vorgesehen ist, wobei sich das Rotorblechpaket (8) in einem Raum zwischen dem ersten und dem zweiten Lager (13, 14) erstreckt, **dadurch gekennzeichnet, dass**
- die Rotorwelle (10) einen sich axial über das zweite Lager (14) hinausragenden Wellenabschnitt mit einem Abtriebselement (37, 38) aufweist, wobei sich die zentrale Ausnehmung (10a) der Rotorwelle (10) axial bis in den Bereich des Abtriebselements (37, 38) erstreckt und von dem Kühlfluid durchströmt wird.

2. Elektrische Maschine nach Anspruch 1, **dadurch gekennzeichnet, dass** das Trägerelement (17) als erstes Lagerschild (11) fungiert.

3. Elektrische Maschine nach Anspruch 1 oder 2, **dadurch gekennzeichnet, dass** die Rotorwelle (10) mit einem Getriebe (36) in Wirkverbindung steht, wobei der axial über das zweite Lager (14) hinausragende Wellenabschnitt der Rotorwelle (10) in das Getriebe (36) führt.

4. Elektrische Maschine nach Anspruch 3, **dadurch gekennzeichnet, dass** sich das Kühlrohr (16) innerhalb der Rotorwelle (10) axial über das zweite Lager (14) hinaus in Richtung des Getriebes (36) erstreckt.

5. Elektrische Maschine nach einem der Ansprüche 1 - 4, **dadurch gekennzeichnet, dass** das Abtriebselement (37, 38) an der Rotorwelle (10a) axial zwischen dem zweiten Lager (14) und einem dritten Lager (39) angeordnet ist, wobei sich die zentrale Ausnehmung (10a) der Rotorwelle (10) axial bis in den Bereich des dritten Lagers (39) erstreckt und von dem Kühlfluid durchströmt wird.

6. Elektrische Maschine nach einem der Ansprüche 1-5, **dadurch gekennzeichnet, dass** das Abtriebselement (38) als Zahnrad (37) ausgebildet ist.

7. Elektrische Maschine nach einem der Ansprüche 1 - 6, **dadurch gekennzeichnet, dass** ein Innendurchmesser der Rotorwelle (10) im Bereich einer axialen Erstreckung des Rotorblechpakets (8) und im Bereich des zweiten Lagers (14) größer ist als im Bereich des ersten Lagers (13).

8. Elektrische Maschine nach einem der Ansprüche 1 - 7, **dadurch gekennzeichnet, dass** die Fluid-Kühleinrichtung (15) einen Kühlabschnitt (15a) zur Kühlung des Rotors (7) und einen Kühlabschnitt (15b) zur Kühlung des Stators (4) aufweist, welche nacheinander von dem Kühlfluid durchflossen werden.

## Claims

1. Electric machine (1) having a fluid cooling device (15), comprising
- a stator (4) having a stator laminated core (5) and having a stator winding (6),
- a rotor (7) having a rotor laminated core (8), said rotor being mounted so as to be rotatable about an axis (A) relative to the stator (4) by means of a rotor shaft (10) and a first bearing (13) which is arranged on a first end shield (11), and wherein
- the fluid cooling device (15) has a cooling tube (16) which is fixed to a carrier element (17), which is fixed relative to the stator, of the electric machine (1) and is connected to a fluid inlet (18) and which extends axially within a central cutout (10a) of the rotor shaft (10) and so as to form an annular space (10b) relative to the rotor shaft (10), wherein
- the cooling tube (16) is fluidically connected to the annular space (10b) and to a fluid outlet (19), and wherein
- a sealing region (20) having a sealing element (21) is provided between the rotor shaft (10) and the carrier element (17), said sealing element at least substantially preventing a transfer of fluid into a space region (22) of the electric machine (1) that lies outside the sealing region (20) when a cooling fluid is flowing through from the fluid inlet (18) to the fluid outlet (19), wherein
- for the mounting of the rotor (7), a second bearing (14) which is axially spaced apart from the first bearing (13) is provided between the rotor shaft (10) and a second end shield (12), wherein the rotor laminated core (8) extends in a space between the first and the second bearing (13, 14), **characterized in that**
- the rotor shaft (10) has a shaft portion which protrudes axially beyond the second bearing (14) and has an output element (37, 38), wherein the central cutout (10a) of the rotor shaft (10) extends axially into the region of the output element (37, 38) and is flowed through by the cooling fluid.

2. Electric machine according to Claim 1, **characterized in that** the carrier element (17) functions as first end shield (11).

3. Electric machine according to Claim 1 or 2, **characterized in that** the rotor shaft (10) is operatively connected to a transmission (36), wherein that shaft portion of the rotor shaft (10) which protrudes axially beyond the second bearing (14) leads into the transmission (36).

4. Electric machine according to Claim 3, **characterized in that** the cooling tube (16) extends within the rotor shaft (10) axially beyond the second bearing (14) in the direction of the transmission (36).

5. Electric machine according to one of Claims 1-4, **characterized in that** the output element (37, 38) is arranged on the rotor shaft (10) axially between the second bearing (14) and a third bearing (39), wherein the central cutout (10a) of the rotor shaft (10) extends axially into the region of the third bearing (39) and is flowed through by the cooling fluid.

6. Electric machine according to one of Claims 1-5, **characterized in that** the output element (38) is in the form of a gear (37).

7. Electric machine according to one of Claims 1-6, **characterized in that** an inner diameter of the rotor shaft (10) in the region of an axial extent of the rotor laminated core (8) and in the region of the second bearing (14) is greater than in the region of the first bearing (13) .

8. Electric machine according to one of Claims 1-7, **characterized in that** the fluid cooling device (15) has a cooling portion (15a) for cooling the rotor (7) and a cooling portion (15b) for cooling the stator (4), which are successively flowed through by the cooling fluid.

## Revendications

1. Machine électrique (1) munie d'un dispositif de refroidissement par fluide (15), comprenant
- un stator (4) comportant un empilage de tôles de stator (5) et comportant un enroulement de stator (6),
- un rotor (7) comportant un empilage de tôles de rotor (8), lequel est monté de manière rotative autour d'un axe (A) par rapport au stator (4) à l'aide d'un arbre de rotor (10) et d'un premier palier (13) disposé sur un premier flasque de palier (11) et dans laquelle
- le dispositif de refroidissement par fluide (15) comprend un tube de refroidissement (16), lequel est fixé sur un élément de support (17), solidaire du stator, de la machine électrique (1) et est en liaison avec une entrée de fluide (18) et lequel s'étend axialement à l'intérieur d'un évidement central (10a) de l'arbre de rotor (10) et en formant un espace annulaire (10b) par rapport à l'arbre de rotor (10), dans laquelle
- le tube de refroidissement (16) est en liaison fluidique avec l'espace annulaire (10b) et avec une sortie de fluide (19) et dans laquelle
- une région d'étanchéité (20) comportant un élément d'étanchéité (21) est prévue entre l'arbre de rotor (10) et l'élément de support (17), laquelle, lors d'un écoulement d'un fluide de refroidissement de l'entrée de fluide (18) à la sortie de fluide (19), empêche au moins sensiblement un passage de fluide dans une région spatiale (22) de la machine électrique (1) qui se situe à l'extérieur de la région d'étanchéité (20), dans laquelle
- pour le montage du rotor (7), un deuxième palier (14) espacé axialement du premier palier (13) est prévu entre l'arbre de rotor (10) et un deuxième flasque de palier (12), dans laquelle l'empilage de tôles de rotor (8) s'étend dans un espace entre le premier et le deuxième palier (13, 14),
**caractérisée en ce que**
- l'arbre de rotor (10) présente un tronçon d'arbre dépassant axialement au-delà du deuxième palier (14) et comportant un élément de sortie (37, 38), l'évidement central (10a) de l'arbre de rotor (10) s'étendant axialement jusque dans la région de l'élément de sortie (37, 38) et le fluide de refroidissement s'écoulant à travers l'évidement.

2. Machine électrique selon la revendication 1, **caractérisée en ce que** l'élément de support (17) fonctionne comme premier flasque de palier (11).

3. Machine électrique selon la revendication 1 ou 2, **caractérisée en ce que** l'arbre de rotor (10) est en liaison fonctionnelle avec une transmission (36), le tronçon d'arbre, dépassant axialement au-delà du deuxième palier (14), de l'arbre de rotor (10) menant dans la transmission (36).

4. Machine électrique selon la revendication 3, **caractérisée en ce que** le tube de refroidissement (16) s'étend à l'intérieur de l'arbre de rotor (10) axialement au-delà du deuxième palier (14) en direction de la transmission (36).

5. Machine électrique selon l'une des revendications 1 - 4, **caractérisée en ce que** l'élément de sortie (37, 38) est disposé au niveau de l'arbre de rotor (10a) axialement entre le deuxième palier (14) et un troisième palier (39), l'évidement central (10) de l'arbre de rotor (10) s'étendant axialement jusque dans la région du troisième palier (39) et le fluide de refroidissement s'écoulant à travers l'évidement.

6. Machine électrique selon l'une des revendications 1 - 5, **caractérisée en ce que** l'élément de sortie (38) est réalisé sous forme de roue dentée (37).

7. Machine électrique selon l'une des revendications 1 - 6, **caractérisée en ce qu'**un diamètre intérieur de l'arbre de rotor (10) est plus grand dans la région d'une étendue axiale de l'empilage de tôles de rotor (8) et dans la région du deuxième palier (14) que dans la région du premier palier (13).

8. Machine électrique selon l'une des revendications 1 - 7, **caractérisée en ce que** le dispositif de refroidissement par fluide (15) présente une partie de refroidissement (15a) servant au refroidissement du rotor (7) et une partie de refroidissement (15b) servant au refroidissement du stator (4), parties à travers lesquelles le fluide de refroidissement s'écoule successivement.
